# EUROPEAN PATENT APPLICATION

(11) **EP 3 594 866 A1**
(43) Date of publication of application: **15.01.2020**
(21) Application number: 19185108.8
(22) Date of filing: 09.07.2019
(51) Int. Cl.: G06N 20/20, G06N 3/04, G06N 3/08, G06N 5/00, G06N 5/04

(54) **METHOD AND SYSTEM FOR GENERATION OF HYBRID LEARNING TECHNIQUES**

(30) Priority: 09.07.2018 IN 201821025625
(71) Applicant: Tata Consultancy Services Limited, Maharashtra (IN)
(72) Inventor: UKIL, Arijit, 700160 Kolkata, West Bengal (IN); BANDYOPADHYAY, Soma, 700160 Kolkata, West Bengal (IN); MALHOTRA, PANKAJ, 201309 Noida, Uttar Pradesh (IN); PAL, Arpan, 700156 Kolkata, West Bengal (IN); VIG, LOVEKESH, 122003 Gurgaon - Haryana (IN); SHROFF, GAUTAM, 122003 Gurgaon - Haryana (IN); BOSE, Tulika, 700160 Kolkata, West Bengal (IN); SAHU, Ishan, 700160 Kolkata, West Bengal (IN); MUKHERJEE, Ayan, 700160 Kolkata, West Bengal (IN)
(74) Representative: Goddar, Heinz J.

(57) **Abstract**

The disclosure herein describes a method and a system for generating hybrid learning techniques. The hybrid learning technique refers to learning techniques that are a combination a plurality of techniques that include of deep learning, machine learning and signal processing to enable a rich feature space representation and classifier construction. The generation of the hybrid learning techniques also considers influence/impact of domain constraints that include business requirements and computational constraints, while generating hybrid learning techniques. Further from the plurality hybrid learning techniques a single hybrid learning technique is chosen based on performance matrix based on optimization techniques.

## Description

### CROSS-REFERENCE TO RELATED APPLICATIONS AND PRIORITY

The present application claims priority from Indian provisional patent application no. 201821025625, filed on July 9, 2018. The entire contents of the aforementioned application are incorporated herein by reference.

### TECHNICAL FIELD

The disclosure herein generally relates to learning methods, and, more particularly, to a method and system for generation of hybrid learning techniques that are a combination a plurality of techniques that include of deep learning, machine learning and signal processing.

### BACKGROUND

With advancement in technology, enormous amount of data is collected using plurality of sensors, this data has to be stored, processed, distributed and analyzed across various platforms. It is important to analyze collected data to derive relevant information and further utilize the analyzed data for different kinds of activities. The analysis of collected data would be efficient and relevant if they are predicted individually for each collected input based on the type of data collected. Thus it is important to analyze the collected data and predict a data processing technique/learning method to derive relevant information from the collected data and use it further for numerous applications.

A large number of Internet of things (IoT) devices use a plurality of sensors across different applications to capture variety of data with respect to time. Time series sensor signal captured by the plurality of sensors are of different types of data and may comprise various types of information that need to be analyzed for further use in numerous applications. There are several well-known data analytics techniques/learning methods that are being used to analyze variety of time series sensor signal, of which machine learning and deep learning are popularly used. However the techniques used to analyze time series sensor signal may need intervention of expert or are not very efficient in absence of human intervention. Further machine learning techniques work efficiently on short term segment and local phenomena, while deep learning works efficiently on long term segment and historic phenomena.

### SUMMARY

Embodiments of the present disclosure present technological improvements as solutions to one or more of the above-mentioned technical problems recognized by the inventors in conventional systems. For example, in one embodiment, a method for generating hybrid learning techniques is provided. The hybrid learning techniques refers to learning techniques that are a hybrid combination a plurality of techniques that include of deep learning, machine learning and signal processing, while also considering domain constraints that include business requirements and computational constraints. Further from the plurality hybrid learning techniques generated, a single hybrid learning techniques is chosen based on performance matrix based on optimization techniques. The proposed hybrid combination of multiple learning techniques enable a rich feature space representation and classifier construction. The system includes an input module for receiving sensor signals as an input, wherein the sensor signals are captured using a plurality of different sensors. The system further includes a pre-processing and noise cleaning module for processing the received the sensor signals for noise removal. The system further includes a path selector for choosing a plurality of learning techniques for the processed sensor signal based on a plurality of domain constraints. The system further includes a feature generation module, a feature recommendation module and a classification module for generating a plurality of hybrid learning techniques from the plurality of learning techniques. The system further includes an optimization module for choosing a hybrid learning technique from the generated plurality of hybrid learning techniques based on the performance matrix generated individually for each of the plurality of hybrid learning techniques based on optimization techniques and an output module for displaying the chosen hybrid learning technique signal analytics of the received sensor signals.

In another aspect, a method for generating hybrid learning techniques is provided. The method includes receiving sensor signals as an input, wherein the sensor signals are captured using a plurality of different sensors. Further the method includes processing the received the sensor signals for noise removal. Further the method includes choosing a plurality of learning techniques for the processed sensor signal based on a plurality of domain constraints. Further the method includes generating a plurality of hybrid learning techniques from the plurality of learning techniques. Further the method includes generating a performance matrix individually for each of the plurality of hybrid learning techniques based on optimization techniques. Further the method includes predicting the hybrid learning technique from the generated plurality of hybrid learning techniques based on the performance matrix and generating a unique feature representation for the predicted hybrid learning techniques.

In yet another aspect, a non-transitory computer readable medium for generating hybrid learning techniques is provided. The program includes receiving sensor signals as an input, wherein the sensor signals are captured using a plurality of different sensors. The program further includes processing the received the sensor signals for noise removal. Further the program includes choosing a plurality of learning techniques for the processed sensor signal based on a plurality of domain constraints. Further the program includes generating a plurality of hybrid learning techniques from the plurality of learning techniques. Further the program includes generating a performance matrix individually for each of the plurality of hybrid learning techniques based on optimization techniques. Further the program includes predicting the hybrid learning technique from the generated plurality of hybrid learning techniques based on the performance matrix and generating a unique feature representation for the predicted hybrid learning techniques.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for generation of hybrid learning techniques according to some embodiments of the present disclosure.
FIG. 2 is a functional block diagram for generation of hybrid learning techniques according to some embodiments of the present disclosure.
FIG. 3 illustrates generating a hybrid learning technique for sensor signal analytics in accordance with some embodiments of the present disclosure.
FIG. 4 is an illustrated use case example for unique feature representation of hybrid learning techniques
FIG. 5 is an illustrated use case example for generating a hybrid learning technique for sensor signal analytics according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

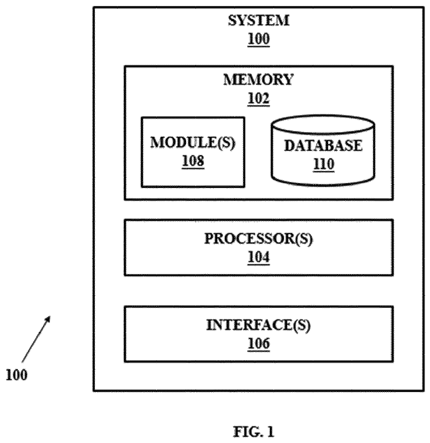

Referring now to the drawings, and more particularly to FIG. 1 through FIG.4, where similar reference characters denote corresponding features consistently throughout the figures, there are shown preferred embodiments and these embodiments are described in the context of the following exemplary system and/or method.

FIG. 1 illustrates an exemplary block diagram of a system 100 for generating hybrid learning techniques according to an embodiment of the present disclosure. In an embodiment, the system 100 includes one or more processors 104, communication interface device(s) or input/output (I/O) interface(s) 106, and one or more data storage devices or memory 102 operatively coupled to the one or more processors 104. The memory 102 comprises one or more modules 108 and a database 110. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical subject interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

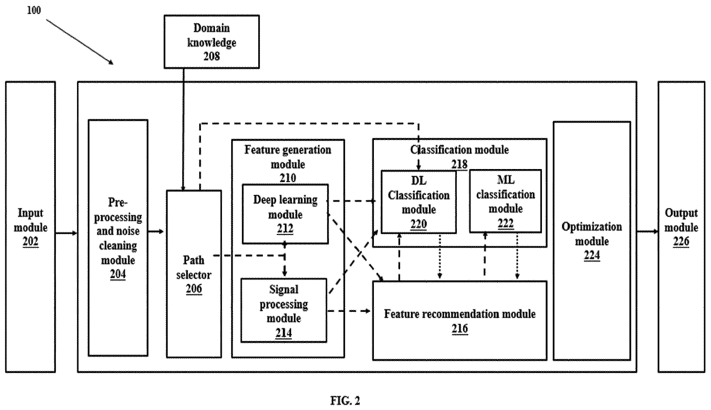

The system 100 of FIG. 2, with reference to FIG. 1, is a block diagram of various modules 108 stored in the memory 102 of the system 100 of FIG. 1 in accordance with an embodiment of the present disclosure. In an embodiment of the present disclosure, the FIG.2 comprises an input module 202 for receiving sensor signals as an input, wherein the sensor signals are captured using a plurality of sensors. Upon receiving the sensor signals, the received the sensor signals are processes in a pre-processing and noise cleaning module 204 for noise removal. Further a plurality of learning techniques are chosen in a path selector 206 for the processed sensor signal based on a plurality of domain constraints that are obtained from a domain knowledge 208 module. Further a plurality of hybrid learning techniques are generated from the chosen plurality of learning techniques in a feature generation module 210, a feature recommendation module 216, classification module 218. A single hybrid learning technique is chosen for further use based on optimization techniques in an optimization module 224. The chosen hybrid learning technique is displayed on an output module 226.

According to an embodiment of the disclosure, the system 100 comprises the input module 202 configured to receive sensor signals as an input, wherein the sensor signals are captured using the plurality of sensors. In an embodiments, the plurality of sensors comprises of time series data from diverse application domains including exemplary domains physiological time series sensor signals that include Electrocardiography (ECG), Electroencephalography (EEG), motion sensors that include accelerometer, gyro meter, magnetometer, temperature sensors.

According to an embodiment of the disclosure, the system 100 comprises the pre-processing and noise cleaning module 204 that is configured to process the received the sensor signals for noise removal. The received plurality of sensor signals are pre-processed based on normalization techniques. The pre-processing and noise removal is performed using known normalization techniques that include Z-score, min-max, normalization techniques based on auto-threshold and statistical isolation.

According to an embodiment of the disclosure, the system 100 comprises the path selector 206 configured to choose a plurality of learning techniques for the processed sensor signal based on a plurality of domain constraints. The plurality of learning techniques are chosen using a rule based engine and domain constraints, wherein the domain constraints are obtained from the domain knowledge 208 module. The rule engine based path selector 206, selects a learning path with maximum performance wherein, the maximum performance is selected based on parameters that include accuracy, sensitivity and specificity. The domain constraints obtained from the domain knowledge 208 module include business requirements and computational constraints. In an embodiment learning path (viable hybrid path of training) is chosen based on the practical constraints like computing power, memory availability of the computing device and real-time response requirement of the application.

According to an embodiment of the disclosure, the system 100 comprises the feature generation module 210, the feature recommendation module 216 and the classification module 218 to generate a plurality of hybrid learning techniques from the plurality of learning techniques.

In an embodiment the feature generation module 210 further comprises of a deep learning module 212 and a signal processing module 214. The features generation techniques are generated based on unsupervised learning techniques that include deep learning and signal processing techniques information theoretic, and statistical features along with features of pre-trained deep recurrent neural network. The features generated are hybrid in nature and are fused to result in hybrid feature generated techniques that are further processed for feature recommendation and classification techniques. This fusing results in feature representation of the hybrid feature generated techniques.

In an embodiment a use case example for feature generation is based on signal processing in the signal processing module 214 involves splitting each of the plurality of sensor signals to a plurality of time windows; transforming each of the plurality of sensor signals in each of the plurality of time windows to time domain, frequency domain, and wavelet domain; processing the time domain, frequency domain, and wavelet domain based on a generic feature set comprising at least one of or a combination of a plurality of statistics, further wherein the plurality of statistics comprise mean, standard deviation, kurtosis, skewness, zero crossings, energy, Root Mean Square (RMS), box pierce statistics, hurst exponent and generating a feature matrix corresponding to each of the plurality of sensor signals, wherein the feature matrix provides a unique feature space representation of the plurality of sensor signals. Further from the feature matrix, at least one relevant feature is selected, by performing a feature selection, via the one or more hardware processors, and the plurality of sensor signals are classified based on classifiers that include multi-stage binary classification or a multi-class classification, based on the at least one relevant feature, via the one or more hardware processors.

In an embodiment, another use case example for feature generation in the deep learning module 212 is performed based on TimeNeT based feature extraction, wherein a TimeNeT format representation is generated for the received sensor signals, where TimeNeT format is a unique features set that comprises a fixed dimensional feature vector. Further the unique features set pertaining each of the plurality of parameters is concatenated to obtain a concatenated features set comprising a fixed-dimensional concatenated feature vector. Further a non-temporal linear classification model is generated based on the concatenated features set, wherein during the learning of the non-temporal linear classification model a weight is assigned to each feature from the concatenated features set.

In an embodiment, another use case example for feature generation is automated feature extraction from time series sensor data to capture statistical, temporal, spectral, and morphological properties based on SPGF-TimeNeT. A SPGF-TimeNeT is a generic feature extractor for time series sensor signals that allows fusion of signal processing, information-theoretic, and statistical features (Signal Properties based Generic Features (SPGF)) with features from pre-trained deep recurrent neural network (TimeNeT), through empirical evaluation on diverse benchmark datasets from the UCR Time Series Classification (TSC) archive for time series classification. Further classifiers trained on SPGF-TimeNet-based hybrid and generic features are used for classification.

In an embodiment the feature recommendation module 216 is configured to generate feature recommendation techniques that are implemented based on statistical measures, ranking and classification techniques.

In an embodiment, the feature recommendation techniques comprises statistical measures, ranking and classification techniques , wherein a set of features are derived from the extracted plurality of generated features based on a plurality of statistical measures corresponding to the extracted plurality of generated features.

In an embodiment the classification module 218 further comprises a deep learning (DL) classification module 220 and machine learning (ML) classification module 222 for generating classification techniques include deep learning and machine learning techniques.

The hybrid learning techniques refers to learning techniques that are a hybrid combination a plurality of techniques that include of deep learning, machine learning and signal processing that is performed in the feature generation module 210, the feature recommendation module 216 and the classification module 218. The hybrid learning techniques could be any possible hybrid combination of the deep learning, machine learning and signal processing including a few hybrid learning techniques listed below ;
1. One of the hybrid learning techniques generated for the plurality of learning techniques would be feature generation combination of deep learning in deep learning module 212 and signal processing in the signal processing module 214. In an embodiment, techniques are fused to generate an unique feature representation that represents the hybrid learning technique for this specific hybrid learning techniques.
2. One of the hybrid learning techniques generated for the plurality of learning techniques would be feature generation of the plurality of learning techniques in the signal processing module 214, followed by recommendation of sub-sets for features generated for the plurality of learning techniques in the feature recommendation module 216 and finally classification of the plurality of learning techniques in the ML classification module 222.
3. One of the hybrid learning techniques generated for the plurality of learning techniques would be performing classification pre-processed training time series sensor signal in the DL classification module 220.
4. One of the hybrid learning techniques generated for the plurality of learning techniques would be feature generation of the pre-processed training time series sensor signal in the signal processing module 214, followed by recommendation of sub-sets for features generated for the pre-processed training time series sensor signal in the feature recommendation module 216 and finally classification of the plurality of learning techniques in the DL classification module 220.
5. One of the hybrid learning techniques generated for the plurality of learning techniques would be feature generation of the plurality of learning techniques in the signal processing module 214, followed by the feature recommendation module 216, followed by classification of the plurality of learning techniques in the ML classification module 222.
6. One of the hybrid learning techniques generated for the plurality of learning techniques would be feature generation of the plurality of learning techniques in the deep learning module 212 or by signal processing module 214 or by a hybrid combination of deep learning module 212 and signal processing module 214, followed by directly feeding to module DL classification module 220 or ML classification module 222, or followed by feature recommendation module 216, followed by classification of the plurality of learning techniques in the DL classification module 220 or ML classification module 222.
7. One of the hybrid learning techniques generated for the plurality of learning techniques would be feature generation of the plurality of learning techniques in the deep learning module 212, followed by recommendation of sub-sets for features generated for the plurality of learning techniques in the feature recommendation module 216 and finally classification of the plurality of learning techniques in the DL classification module 220.
8. One of the hybrid learning techniques generated for the plurality of learning techniques would be feature generation of the plurality of learning techniques in the deep learning module 212, followed by recommendation of sub-sets for features generated for plurality of learning techniques in the feature recommendation module 216 and finally classification of the plurality of learning techniques in the ML classification module 222.
9. One of the hybrid learning techniques generated for the plurality of learning techniques would be feature generation of the plurality of learning techniques in the deep learning module 212, followed by classification of the plurality of learning techniques the DL classification module 220.

The proposed techniques generates a list of plurality of hybrid learning techniques as listed above. Further the list of multiple plurality of hybrid learning techniques which are generated are further optimized to choose the most optimum plurality of hybrid learning techniques among the generated techniques which is explained in the further section. However , in case a hybrid learning techniques is generated from just one single module then the techniques are fused to generate an unique feature representation that represents the hybrid learning technique, as in the case for a feature generation combination of deep learning in deep learning module 212 and signal processing in the signal processing module 214.

According to an embodiment of the disclosure, the system 100 comprises the optimization module 224 configured to choose a hybrid learning technique from the generated plurality of hybrid learning techniques based on the performance matrix generated individually for each of the plurality of hybrid learning techniques based on optimization techniques. The plurality of multiple hybrid learning techniques which are generated using a combination of feature generation module 210, feature recommendation module 216 and classification module 218 are further optimized individually to choose the most optimum hybrid learning techniques among the generated hybrid learning techniques.

A performance matrix is generated individually for each of the plurality of hybrid learning techniques based on optimization techniques, wherein optimization techniques for prediction of performance matrix individually for each hybrid learning techniques is based on performing constraint optimization techniques. In an embodiment, constraint optimization techniques are performed for each of the performance matrix individually generated for each hybrid learning techniques. In an embodiment, prediction of performance matrix may include maximizing a 'F1-score' parameter such that sensitivity is more than '0.7'. Further after performing the proposed constraint optimization techniques for prediction of performance matrix individually for each hybrid learning techniques, and the hybrid learning techniques whose sensitivity is more than '0.7' is chosen as the hybrid learning techniques to carry out further testing of the received sensor signals. However if two or more hybrid learning techniques have sensitivity is more than '0.7', then they are all compared and the hybrid learning techniques with maximum value is chosen as the hybrid learning techniques to carry out further testing of the received sensor signals.

According to an embodiment of the disclosure, the system 100 comprises the output module 226 for displaying the chosen hybrid learning technique signal analytics of the received sensor signals

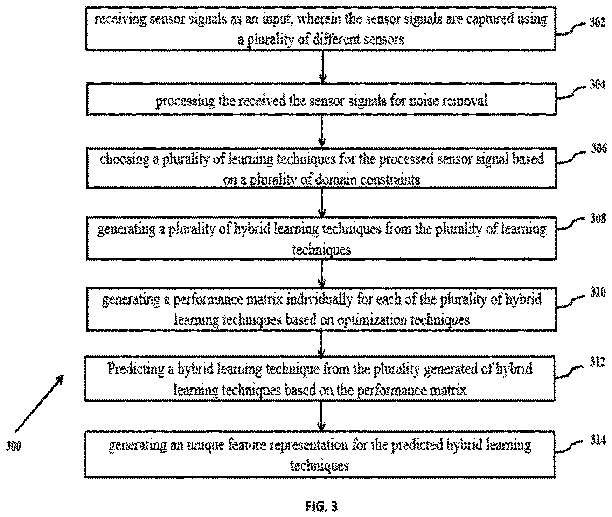

FIG. 3 is a flow diagram illustrating steps involved in a method 300 for generating hybrid learning techniques using the system of FIG. 1 in accordance with some embodiments of the present disclosure.

As depicted in FIG. 3, at step 302 the method 300 includes receiving sensor signals as an input, wherein the sensor signals are captured using the plurality of sensors in the input module 202. The plurality of sensors include sensors from diverse application domains including exemplary domains physiological time series sensor signals that include Electrocardiography (ECG), Electroencephalography (EEG), motion sensors, gyro meter, magnetometer, temperature sensors.

At step 304, the method 300 includes processing the received the sensor signals for noise removal in the pre-processing and noise cleaning module 204 based on normalization techniques.

At step 306, the method 300 includes choosing a plurality of learning techniques in the path selector 206 for the processed sensor signal based on a plurality of domain constraints obtained from domain knowledge 208 module. The plurality of learning techniques are chosen using a rule based engine and domain constraints, wherein the domain constraints include business requirements and computational constraints.

At step 308, the method 300 includes generating a plurality of hybrid learning techniques from the plurality of learning techniques in the feature generation module 210, the feature recommendation module 216 and the classification module 218. The hybrid learning techniques refers to learning techniques that are a hybrid combination a plurality of techniques that include of deep learning, machine learning and signal processing. The features generation techniques performed in the feature generation module 210 are based on unsupervised learning techniques that include deep learning and signal processing techniques (feature space exploration) information theoretic, and statistical features along with features of pre-trained deep recurrent neural network. Further the generated features generation techniques which are hybrid in nature are fused to result in hybrid feature generated techniques that are further processed for feature recommendation and classification techniques. Further the wherein feature recommendation techniques that are performed in the feature recommendation module 216 are implemented based on statistical measures, ranking and classification techniques. Further the classification techniques performed in the classification module 218 include deep learning and machine learning techniques.

At step 310, the method 300 includes generating a performance matrix individually for each of the plurality of hybrid learning techniques based on optimization techniques in the optimization module 224. The performance matrix is generated based on optimization techniques that include performing constraint optimization, wherein parameters are maximized based on a pre-defined threshold.

At step 312, the method 300 includes choosing a hybrid learning technique from the plurality generated of hybrid learning techniques based on the performance matrix in the optimization module 224. The chosen hybrid learning technique signal analytics of the received sensor signals is displayed on the output module 226.

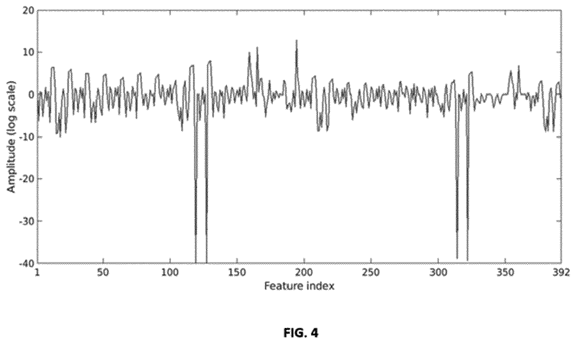

At step 314, the method 300 includes generating a unique feature representation as a part of hybrid learning techniques. In an embodiment, a unique feature representation of a hybrid learning technique is shown in FIG. 4, wherein an use case example for classification of engine noise, the generated hybrid learning techniques of 392 SPGF feature is shown as unique feature representation, with x-axis representing feature index and y-axis representing amplitude.

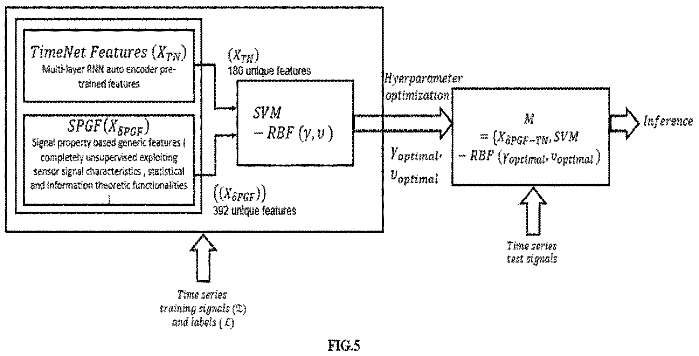

FIG. 5 is an illustrated use case example for generating a hybrid learning technique for sensor signal analytics according to some embodiments of the present disclosure. The features of the sensor signals are extracted based on TimeNeT and SPGF (Signal Property based Generic Features), wherein 180 unique features are extracted based on TimeNet techniques and 392 features are extracted based on SPGF techniques. The extracted features are fused and hyperparameter optimization is performed to infer the hybrid analysis technique.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein describe method and system for generating hybrid learning techniques. The hybrid learning techniques refers to learning techniques that are a hybrid combination a plurality of techniques that include of deep learning, machine learning and signal processing, while also considering domain constraints that include business requirements and computational constraints. Further from the plurality hybrid learning techniques generated, a single hybrid learning techniques is chosen based on performance matrix based on optimization techniques. The proposed hybrid combination of multiple learning techniques enable a rich feature space representation and classifier construction.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method for generating a hybrid learning technique for sensor signal analytics, the method comprising:
receiving sensor signals as an input, wherein the sensor signals are captured using a plurality of different sensors;
processing the received the sensor signals for noise removal;
choosing a plurality of learning techniques for the processed sensor signal based on a plurality of domain constraints;
generating a plurality of hybrid learning techniques from the plurality of learning techniques;
generating a performance matrix individually for each of the plurality of hybrid learning techniques based on optimization techniques;
predicting the hybrid learning technique from the generated plurality of hybrid learning techniques based on the performance matrix; and
generating an unique feature representation for the predicted hybrid learning techniques.

2. The method according to claim 1, wherein hybrid learning techniques refers to learning techniques that are a hybrid combination a plurality of techniques that include of deep learning, machine learning and signal processing.

3. The method according to claim 1, wherein the plurality of sensors are from diverse application domains including exemplary domains physiological time series sensor signals that include Electrocardiography (ECG), electroencephalography (EEG), motion sensors that include accelerometer, gyro meter, magnetometer, temperature sensors.

4. The method according to claim 1, wherein the plurality of learning techniques are chosen using a rule based engine and domain constraints, wherein the domain constraints include business requirements and computational constraints.

5. The method according to claim 1, wherein the plurality of hybrid learning techniques are generated based on feature generation, feature recommendation and classification techniques.

6. The method according to claim 5, wherein features generation techniques are based on unsupervised learning techniques that include deep learning and signal processing techniques (feature space exploration) information theoretic, and statistical features along with features of pre-trained deep recurrent neural network.

7. The method according to claim 6, where the generated features generation techniques are fused to generate a unique feature representation that represents the hybrid learning technique to be displayed on an output module (226).

8. The method according to claim 5, wherein the feature recommendation techniques are implemented based on statistical measures, ranking, classification techniques and the classification techniques include deep learning and machine learning techniques.

9. The method according to claim 1, wherein the performance matrix is generated based on optimization techniques that include performing constraint optimization, wherein parameters are maximized based on a pre-defined threshold.

10. The method according to claim 1, wherein the predicted hybrid learning technique and its corresponding unique feature representation is displayed on the output module (226) for signal analytics of the received sensor signals.

11. A system (100) for generating a hybrid learning technique for sensor signal analytics, comprising:
a memory (102) storing instructions and one or more modules (108);
a database (110);
one or more communication or input/output interfaces (106); and
one or more processors (104) coupled to the memory (102) via the one or more communication interfaces (106), wherein the one or more processors (104) are configured by the instructions to execute the one or more modules (108) comprising:
an input module (202) for receiving sensor signals as an input, wherein the sensor signals are captured using a plurality of different sensors;
a pre-processing and noise cleaning module (204) for processing the received the sensor signals for noise removal;
a path selector (206) for choosing a plurality of learning techniques for the processed sensor signal based on a plurality of domain constraints;
a feature generation module (210), a feature recommendation module (216) and a classification module (218) for generating a plurality of hybrid learning techniques from the plurality of learning techniques;
a optimization module (224) for choosing a hybrid learning technique from the generated plurality of hybrid learning techniques based on the performance matrix generated individually for each of the plurality of hybrid learning techniques based on optimization techniques; and
an output module (226) for displaying the chosen hybrid learning technique signal analytics of the received sensor signals.

12. The system according to claim 11, wherein the feature generation module(210) further comprises of deep learning module (212) and signal processing module (214) for generating unsupervised learning techniques that include deep learning and signal processing , information theoretic analysis, and statistical analysis along with features of pre-trained deep recurrent neural network.

13. The system according to claim 11, wherein the classification module (218) further comprises a deep learning (DL) classification module (220) and a machine learning (ML) classification module (222) for generating classification techniques include deep learning and machine learning techniques.

14. The system according to claim 11, further includes a domain knowledge (208) for providing domain constraints to the path selector (206) for choosing a plurality of learning techniques for the processed sensor signal.

15. A computer program product comprising a non-transitory computer readable medium having a computer readable program embodied therein, wherein the computer readable program, when executed on a computing device, causes the computing device to:
receive sensor signals as an input, wherein the sensor signals are captured using a plurality of different sensors;
process the received the sensor signals for noise removal;
choose a plurality of learning techniques for the processed sensor signal based on a plurality of domain constraints;
generate a plurality of hybrid learning techniques from the plurality of learning techniques;
generate a performance matrix individually for each of the plurality of hybrid learning techniques based on optimization techniques;
predict the hybrid learning technique from the generated plurality of hybrid learning techniques based on the performance matrix; and
generate an unique feature representation for the predicted hybrid learning techniques.
